# EUROPÄISCHE PATENTANMELDUNG

(11) **EP 0 959 595 A2**
(43) Veröffentlichungstag der Anmeldung: **24.11.1999**
(21) Anmeldenummer: 99109758.5
(22) Anmeldetag: 18.05.1999
(51) Int. Cl.: H04L 25/02

(54) **Sendeeinrichtung und Bussystem zur Datenübertragung**

(30) Priorität: 18.05.1998 DE 19822259
(71) Anmelder: SIEMENS AKTIENGESELLSCHAFT, 80333 München (DE)
(72) Erfinder: Lenz, Michael, 85604 Zorneding (DE)

(57) **Zusammenfassung**

Die Erfindung betrifft eine Sendeeinrichtung und ein Bussystem zum seriellen Datentransfer von binären Daten zwischen mindestens zwei Kommunikationsstationen, die über eine einzelne Busleitung miteinander gekoppelt sind. Die Sendeeinrichtung einer Kommunikationsstation weist eine Schaltung zur Kurvenformeinstellung auf. Die Schaltungen zur Kurvenformeinstellung erzeugt aus einem zu sendenden Datensignal ein Ausgangssignal mit möglichst sinushalbwellenförmigen Signalflanken. Zur Erzeugung der sinushalbwellenförmigen Signalflanken ist ein Oszillator, ein Taktzähler und ein Parallel-DA-Wandler in Reihe nacheinander geschaltet, wobei am Ausgang des DA-Wandlers ein Ausgangssignal mit stufenförmigen Flanken abgreifbar ist. Über die geeignete Dimensionierung der Referenzelemente des Spannungsteilers des DA-Wandlers sowie mittels eines dem DA-Wandler nachgeschalteten Glättungsfilter ist ein optimiertes Ausgangssignal mit sinushalbwellenförmigen Signalflanken erzeugbar.

## Beschreibung

Die Erfindung betrifft eine Sendeeinrichtung und ein Bussystem zur seriellen Datenübertragung von binären Daten zwischen mindestens zwei Kommunikationsstationen, die über eine einzelne Busleitung miteinander gekoppelt sind.

Ein derartiges, zur seriellen Übertragung von binären Daten geeignetes Bussystem kann beispielsweise ein CAN-Bussystem (Controller Area Network) sein. Ein solches CAN-Bussystem ist beispielsweise in der DE 195 230 31 A1 beschrieben.

Dort ist ein Bussystem zur Übertragung von Daten zwischen verschiedenen, an einem differentiellen Zwei-Drahtbus angekoppelten Kommunikationsstationen mittels Gegentaktsignalen angegeben. Die physikalische Ankopplung an den Zwei-Drahtbus erfolgt über eine in jeder Kommunikationsstation enthaltenen Sende-/Empfangseinrichtungen, dem sogenannten Transceiver (von Transmit und Receive), der zum Senden und zum Empfangen von Daten über den Bus zustatten kommt.

Die Sendeeinrichtung dieser Transceiverschaltung kann wesentlichen Einfluß auf die Flankenform des in den Bus einzukoppelnden Signals nehmen. Werden die Bussignale auf dem Bus mit hinreichend hoher Frequenz getrieben, dann beobachtet man mit zunehmender Frequenz eine ebenfalls zunehmende elektromagnetische Abstrahlung. Gleichermaßen verbreitert sich das Frequenzspektrum der elektromagnetischen Abstrahlung, wenn die Flankensteilheit der in das Bussystem eingekoppelten Bussignale zunimmt. Eine hohe elektromagnetische Abstrahlung und somit eine geringe elektromagnetische Verträglichkeit (EMV) wirkt sich jedoch störend auf andere Baugruppen aus. Es ist daher wünschenswert, die elektromagnetische Abstrahlung in einem Bussystem so gering wie möglich zu halten.

Zur Reduzierung der elektromagnetischen Abstrahlung bei Zwei- oder Mehr-Draht Bussystemen, wie beispielsweise dem Zwei-Draht CAN-Bus (Dual-Wire CAN-Bus), werden die (beiden) Busadern miteinander verdrillt. Durch dieses Verdrillen der Busleitungen (twisted pair) wird die elektromagnetische Abstrahlung weitgehend kompensiert.

Aus Kostengründen ist es häufig günstiger, ein Bussystem mit lediglich einer einzigen Busleitung zu verwenden. Ein solches Bussystem ist beispielsweise der Ein-Draht CAN-Bus (Singe-Wire CAN-Bus). Solche Ein-Draht-Busse weisen hingegen den Nachteil auf, daß die elektromagnetische Abstrahlung nicht wie bei zwei- oder mehradrigen Bussystemen durch Verdrillen kompensiert werden kann.

Zur Reduzierung der elektromagnetischen Abstrahlung werden derartige Bussysteme mit passiven Bauelementen beschaltet. Diese Maßnahme verbessert die elektromagnetische Abstrahlung jedoch nur ungenügend und reduziert zudem die Bandbreite des Bussystems.

Als weitere Maßnahme zur Reduzierung der elektromagnetischen Abstrahlung sind sogenannte "Slew-Rate-Limiter"-Schaltungen bekannt. Diese Schaltungen bewirken eine einfache Abflachung der Flanken der rechteckförmigen Bussignale zu trapezförmigen Siganlen. Mit dieser Maßnahme reduziert sich das Spektrum der abgestrahlten elektromagnetischen Strahlung gegenüber den obengenannten passiven Maßnahmen deutlich.

Um eine weitere Absenkung der Spektralkomponenten der elektromagnetischen Abstrahlung zu erwirken, können die Ecken des so entstandenen trapezförmigen Bussignales durch gezielten Einbau von Widerstands-Kapazität-Zeitkonstanten zusätzlich abgerundet werden.

Durch die obengenannten Maßnahmen ist zwar eine deutliche Reduzierung der elektromagnetischen Abstrahlung erkennbar, jedoch bleibt ein beträchtliches Spektrum unerwünschter elektromagnetischer Abstrahlung übrig.

Ausgehend von diesem Stand der Technik ist es daher die Aufgabe der vorliegenden Erfindung, ein gattungsgemäßes Ein-Draht-Bussystem anzugeben, bei dem eine weitere Reduzierung der elektromagnetischen Abstrahlung erzielbar ist.

Erfindungsgemäß wird diese Aufgabe durch ein Bussystem der eingangs genannten Art dadurch gelöst, daß die Sendeeinrichtung eine Schaltung zur Flankenformeinstellung aufweist, die aus einem zu sendenden Datensignal ein Ausgangssignal erzeugt, dessen aufsteigende und abfallende Flanken an den Kurvenverlauf einer Sinusfunktion angenähert sind, wobei jeweils eine der Flanken an die aufsteigende Sinushalbwelle und die jeweils andere Flanke an die abfallende Sinushalbwelle angenähert ist.

Solche Ausgangssignale mit Flanken in der Form einer Sinushalbwelle weisen einen besonders niedrigen Oberwellengehalt auf, nämlich theoretisch nur die Grundwelle. Auf diese Weise läßt sich durch Vorsehen einer erfindungsgemäßen Schaltung zur Flankenformeinstellung vorteilhafterweise bei einem Ein-Draht-Bussystem die Abstrahlung bzw. die Einstrahlung von unerwünschter elektromagnetischer Strahlung auf ein Minimum reduzieren.

Die Flanken der über den Bus zu übertragenden Ausgangssignale sollen also an die Form einer sinusförmigen Funktion angenähert werden. Für die aufsteigende Flanke wird dabei die aufsteigende Sinushalbwelle und für die abfallende Flanke jeweils die abfallende Sinushalbwelle nachgebildet. In der negativen Logik erzeugt eine aufsteigende Flanke eine abfallende Sinushalbwelle, während eine abfallende Flanke jeweils eine aufsteigende Sinushalbwelle erzeugt.

Als aufsteigende Sinushalbwelle ist dabei der Bereich der sinusförmigen Welle zwischen dessen Minimum und dessen Maximum zu verstehen. Als abfallende Sinushalbwelle hingegen ist der Bereich der sinusförmigen Welle zwischen dessen Maximum und dessen Minimum zu verstehen. Als sinusförmige Funktion ist jede von einer Sinusfunktion bzw. von einer Cosinusfunktion abgeleitete Funktion zu verstehen. Besonders vorteilhaft ist es, wenn als sinusförmige Funktion die Funktion (cosx)² gewählt wird.

Die Schaltung zur Flankenformeinstellung weist in Reihe nacheinandergeschaltete Takterzeugungseinrichtung, Zählereinrichtung und Wandlereinrichtung auf. Die tpyischerweise als Osillator ausgebildete Takterzeugereinrichtung erzeugt ein Taktsignal. Die nachgeschaltete taktgesteuerte Zählereinrichtung, beispielsweise ein Aufwärts-Abwärts-Zähler, zählt kontinuierlich die eingekoppelten Taktimpulse des Oszillators und führt ein von der Anzahl der eingekoppelten Taktimpulse abgeleitetes Zählerstandsignal der nachgeschalteten Wandlereinrichtung zu. Die Wandlereinrichtung, die gewöhnlich ein Digital-Analog-Wandler (DA-Wandler) ist, erzeugt ausgehend vom Zählerstandsignal ein Analogsignal mit stufenförmigen Taktflanken. Die stufenförmigen Flanken des Analogsignals, das am Ausgang des DA-Wandlers abgreifbar ist, bilden die Halbwelle einer sinusförmigen Kurve um so besser nach, je größer die Datentiefe bzw. Bitbreite des Aufwärts-Abwärts-Zählers bzw. des nachgeschalteten DA-Wandlers gewählt ist.

Damit die stufenförmigen Taktflanken im Analogsignal die sinusförmige Halbwelle möglichst optimal nachbildet, ist es notwendig, daß die einzelnen Stufen möglichst nicht die gleiche Stufenhöhe aufweisen. Die optimalen Einstellung der jeweiligen Stufenhöhen und somit die Optimierung der sinusförmige Halbwelle der Taktflanken läßt sich mittels einer geeigneten Dimensionierung der Referenzelemente des Spannungsteilers des DA-Wandlers einstellen.

Besonders vorteilhaft ist dabei die Verwendung eines Parallel-DA-Wandlers. Dieser DA-Wandler weist einen Spannungsteiler mit einer Vielzahl von Referenzwiderständen auf, denen eingangsseitig der jeweilige Zählerstand der vorgeschalteten Zählereinrichtung zugeführt wird. Die Referenzwiderstände sind dabei so einzustellen, daß die Ausgangswerte des D/A-Wandlers dem entsprechenden diskreten Wert auf der sinusförmigen Halbwelle entspricht. Insbesondere ist bei der Dimensionierung der Referenzwiderstände darauf zu achten, daß mit fortschreitenden Zählerstand die jeweilige Stufenhöhe bis zum Erreichen der Zählerstandsmitte, der dem Wendepunkt der sinusförmigenm Halbwelle entspricht, sukzessive zunehmen sollte. Ab der Zählerstandsmitte sollten dann die Stufenhöhen des Analogsignals entsprechend wieder abnehmen. Somit läßt sich über die Dimensionieren der Referenzwiderstände auf einfache Weise die sinusförmige Halbwelle nachbilden.

Es wäre selbstverständlich auch möglich den DA-Wandler auf andere Weise zu realisieren. Alternativ wäre als DA-Wandler, wenngleich auch schaltungstechnisch sehr viel aufwendiger, ein Arbeitswiderstand mit umschaltbaren, steuerbaren Stromquellen denkbar. Die Referenzelemente werden dann durch Stromquellen, die beispielsweise als steuerbare Transistoren ein Diodennetzwerk bilden, gebildet. Die Dimensionierung der Referenzelemente und somit die Erzeugung der optimalen Stufenhöhen im Ausgangssignal des DA-Wandlers könnte dann über die W/L-Verhältnisse der Transistoren erfolgen.

Von besonderem Vorteil ist es außerdem, wenn das die stufenförmigen Taktflanken aufweisende Analogsignal einem Glättungsfilter, insbesondere einem Tiefpaßfilter, zugeführt wird. Mittels geeigneter Dimensionierung der Filterelemente lassen sich die Stufen in den Taktflanken des Analogsignals herausfiltern. Es entsteht dann ein kontinuierliches, analoges Ausgangssignal, das an die sinusförmige Halbwelle optimal angenähert ist .

Typischerweise wird dem DA-Wandler bzw. dem Glättungsfilter noch eine Verstärkereinrichtung mit Rückkopplungszweig nachgeschaltet. Die Verstärkereinrichtung, die bevorzugt als analoger Operationsverstärker ausgebildet ist, verstärkt das auf dem Bus zu treibende Ausgangssignal mit einer geeigneten Verstärkung. In einem speziellen Betriebsmodus, dem sogenannten Wake-Up-Modus, lassen sich damit ein sogenanntes Wake-Up-Signal auf die Busleitung einprägen. Gegenüber dem Normalsignal hat dieses Wake-Up-Signal entsprechend der Verstärkung eine deutlich erhöhte Amplitude. Mit diesem Wake-Up-Signal einer Mastereinheit werden alle Netzwerkknoten am Bussystem, die sich vorher im sogenannten Sleep-Modus befanden, geweckt und danach selektiv aktiv geschaltet oder wieder in den Sleep-Modus gesteuert. Mittels des Wake-Up-Modus wird vorteilhafterweise die mittlere Stromaufnahme eines Bussystems deutlich reduziert, da alle "schlafenden" Netzwerkknoten, die während eines Bustransfers nicht angesprochen werden, im stromsparenden Sleep-Modus verharren.

Besonders vorteilhaft ist es, wenn die Takterzeugungseinrichtung bzw. der Oszillator in deren Arbeitsfrequenz einstellbar ist. Hierzu ist ein einstellbarer Widerstand der Takterzeugungseinrichtung vorgeschaltet. Hierdurch läßt sich die Oszillatorfrequenz und somit die mittlere Steigung der Taktflanke des Ausgangssignals an die gewünschte Datenübertragungsrate anpassen. Je nach Dimensionierung des einstellbaren Widerstandes, der üblicherweise extern ausgebildet ist, läßt sich somit eine mehr oder weniger hohe Datenübertragungsrate des Bussystems realisieren.

Aus Platz und Kostengründen ist es vorteilhaft, wenn die Spannungsregeleinrichtung und die ihm zugeordnete Sende-/Empfangseinrichtung einer Kommunikationsstation auf einem einzigen Halbleiterchip monolithisch integriert sind. Typischerweise werden diese Spannungsreglermodule und die Sende/Empfangseinrichtung monolithisch integriert, da die technologischen Anforderungen dieser Module sehr ähnlich sind. Besonders vorteilhaft ist es, wenn darüber hinaus der Microcontroller zusammen mit der ihm zugeordneten Spannungsregeleinrichtung und Sende/Empfangseinrichtung auch auf dem selben Halbleiterchip monolithisch integriert sind.

Die erfindungsgemäße Schaltung zur Flankenformeinstellung des zu sendenden Signales ist typischerweise in einer Sendeeinrichtung einer Kommunikationsstation integriert. Besonders vorteilhaft ist diese erfindungsgemäße Sendeeinrichtung in einem Bussystem zur Datenübertragung.

Die Erfindung eignet sich besonders im Kraftfahrzeugbereich bei sogenannten CAN-Bordnetzsystemen. Hier steuert ein Mikroprozessor über einen internen Bus und einem sogenannten CAN-Modul, welches das entsprechende CAN-Protokoll enthält, über die Transceiver-Schaltung den Datentransfer über den Ein-Draht-Bus.

Bevorzugte Ausgestaltungen und Weiterbildungen der Erfindung sind in den Unteransprüchen gekennzeichnet.

Die Erfindung wird nachfolgend anhand der in den Figuren der Zeichnung angegebenen Ausführungsbeispiele näher erläutert. Es zeigt dabei
- Figur 1: ein Ein-Draht Bussystem mit einer Anzahl von an den Bus angekoppelten Kommunikationsstationen nach dem Stand der Technik;
- Figur 2: das Blockschaltbild einer erfindungsgemäßen Schaltung zur Flankenformeinstellung für eine Sendeeinrichtung eines Ein-Draht Bussystems;
- Figur 3: die Impuls-Zeit-Diagramme für die in Figur 2 angegebenen Signale;
- Figur 4: ein bevorzugtes Ausführungsbeispiel einer Transceiverschaltung für ein Ein-Draht Bussystem, die eine erfindungsgemäße Schaltung zur Flankenformeinstellung entsprechend Figur 2 aufweist.

In den Figuren der Zeichnung sind gleiche oder funktionsgleiche Elemente und Signale, sofern nicht anders angegeben, mit gleichen Bezugszeichen versehen.

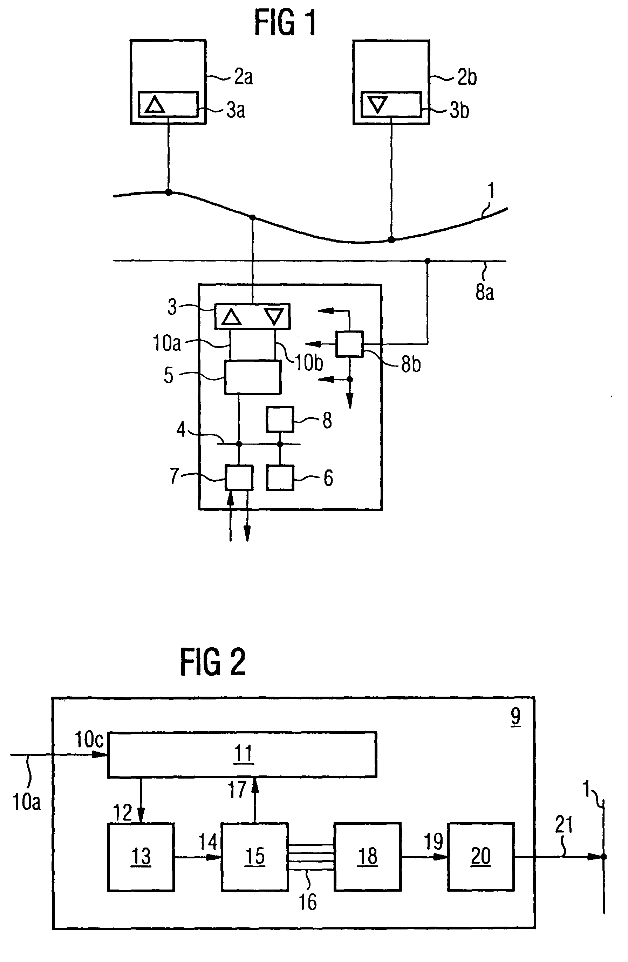

Figur 1 zeigt ein Ein-Draht Bussystem zur seriellen Übertragung von binären Daten zwischen an dem Bus angeschlossenen Kommunikationsstationen nach dem Stand der Technik. Es wird nachfolgend davon ausgegangen, daß das Bussystem ein sogenanntes CAN-Bussystem (Controller Area Network) ist. Weiterhin wird davon ausgegangen, daß als Bus ein sogenannter Ein-Drahtbus bzw. Single-Wire-Bus (SW-Bus) mit einer einzigen Übertragungsleitung vorgesehen ist.

In Figur 1 ist mit 1 die (einzige) Busleitung des Bussystems bezeichnet. Das Bussystem weist eine Vielzahl von Kommunikationsstationen 2, 2a, 2b, die auch als Netzwerkknoten bezeichnet werden, auf. Der Netzwerkknoten 2 besteht aus einem physikalischen Transceiver 3. Der Transceiver 3 bzw. die Sende-/Empfangseinrichtung bildet die Schnittstelle des Netzwerkknotens 2 zum Bus 1. Des Weiteren weist der Netzwerkknoten 2 ein zwischen einem internen Bus 4 und dem Transceiver 3 geschaltetes Kommunikationsinterface 5 auf, das über eine Verbindungsleitung 10a, 10b mit dem Transceiver 3 verbunden ist. Im vorliegenden Ausführungsbeispiel ist die Verbindungsleitung 10a mit der Sendeeinrichtung und die Verbindungsleitung 10b mit der Empfangseinrichtung des Transceivers 3 verbunden. Das Kommunikationsmodul 5 wird häufig auch als CAN-Modul bezeichnet und steuert entsprechend dem CAN-Protokoll den Datentransfer über den Bus.

Des Weiteren weist der Netzwerkknoten 2 einen Mikroprozessor 6, eine I/O-Einrichtung 7 sowie eine Speichereinheit 8 auf, die jeweils an den internen Bus 4 angekoppelt sind. Besonders vorteilhaft ist es, wie in Figur 1 dargestellt, wenn die Elemente 3 bis 8 eines Netzwerkknotens 2 auf einem einzigen Halbleiterchip monolithisch integriert sind. Dies ist insbesondere aus Kostengründen aufgrund des geringeren Platzbedarfes von Vorteil.

Des Weiteren ist eine Spannungsversorgungsleitung 8a zur Spannungsversorgung vorgesehen. Die Spannungsversorgungsleitung 8a ist mit einem typischerweise in der Kommunikationseinrichtung 2 vorgesehenen Spannungsregelmodul 8b verbunden. Das Spannungsregelmodul 8b bezieht somit seine Versorgungsspannung über die Spannungsversorgungsleitung 8a und stellt die Speisespannung für alle bisher genannten Module des Netzwerkknotens 2 bereit. Da die Anforderungen höhe Ströme und hohe Spannungen sowohl von dem Transceiver 3 als auch von dem Spannungsregelmodul 8b erfüllt werden müssen, werden insbesondere diese Module vorteilhafterweise monolithisch auf einem einzigen Halbleiterchip integriert .

Im Beispiel der Figur 1 sind drei Netzwerkknoten 2, 2a, 2b an den Bus 1 angeschlossen. Dabei weist der Netzwerkknoten 2, wie oben erwähnt, einen Transceiver 3 auf, der sowohl zum Senden als auch zum Empfangen von Daten geeignet ist. Der zugehörige Netzwerkknoten 2 arbeitet dabei als Master-Slave-Einheit. Der Netzwerkknoten 2a hingegen weist einen Transceiver 3a auf, der lediglich eine Empfangseinrichtung aufweist und somit ausschließlich zum Empfangen von Daten geeignet ist (Receiver). Der zugehörige Netzwerkknoten 2a ist somit eine Slave-Einheit. Der Netzwerkknoten 2b weist einen Transceiver 3b auf, der als Sendeeinrichtung ausgebildet ist und daher ausschließlich zum Senden von Daten verwendet wird (Transmitter). Der zugehörige Netzwerkknoten 2b ist somit eine Mastereinheit.

Ein oben beschriebenes CAN-Bussystem, das statt einer einzigen Busleitung mit zwei Busleitungen ausgestattet ist, ist in Wolfhard Lawrenz (Hrsg.), CAN - Controller Area Network, Grundlagen und Praxis, Hüthig-Verlag, 1997, Seite 3 ff., beschrieben.

Figur 2 zeigt das Blockschaltbild einer erfindungsgemäßen Schaltung zur Flankenformeinstellung für eine Sendeeinrichtung eines Ein-Draht Bussystems. Zur besseren Übersicht weist das Blockschaltbild in Figur 2 nur die zum Senden von Datensignalen notwendigen Elemente auf.

In Figur 2 ist mit 9 eine Schaltung zur Flankenformeinstellung bezeichnet. Die Schaltung zur Flankenformeinstellung 9 ist hier zwischen der Verbindungsleitung 10a und den Bus 1 geschaltet. Ein zu sendendes (binäres) Datensignal 10c wird über die Verbindungsleitung 10a in eine Steuereinrichtung 11 der Schaltung 9 eingekoppelt. Die Steuereinrichtung 11 erzeugt ein Steuersignal 12, das in eine Takterzeugungseinrichtung 13 eingekoppelt wird. Die Takterzeugungseinrichtung 13, die typischerweise als Oszillator ausgebildet ist, erzeugt an ihrem Ausgang ein Taktsignal 14, das einer nachgeschalteten Zählereinrichtung 15 zugeführt wird. Die Zählereinrichtung 15 ist im vorliegenden Beispiel als 4-Bit Aufwärts-Abwärts-Zähler ausgebildet. Die Zählereinrichtung 15 ermittelt taktgesteuert in Abhänigkeit von der Anzahl der eingekoppelten Takte des Taktsignals 14 jeweils einen Zählerstand, der als Zählerstandssignal 16 am Ausgang der Zählereinrichtung 15 abgreifbar ist. Gleichzeitig erzeugt die Zählereinrichtung 15 ein Regelsignal 17, das in die Steuereinrichtung 11 rückgekoppelt wird.

Der Zählerstand 16 der Zählereinrichtung 15 wird einer nachgeschalteten Wandlereinrichtung 18 zugeführt. Im vorliegenden Ausführungsbeispiel ist die Wandlereinrichtung 18 als Digital-Analog-Wandler (DA-Wandler) ausgebildet. Die Wandlereinrichtung 18 erzeugt ausgangsseitig ein Analogsignal 19 mit stufenförmigen Signalflanken, das einen Glättungsfilter 20, beispeilsweise einem Tiefpaß, zugeführt wird. Das Glättungsfilter 20 erzeugt ein bezüglich der Form der Taktflanken optimiertes Ausgangssignal 21, das über den Ausgang der Schaltung 9 in den Bus 1 einkoppelbar ist. Bei niedriger Busimpedanz ist zwischen der Schaltung 9 und dem Bus 1 ein Verstärker als Impedanzwandler erforderlich.

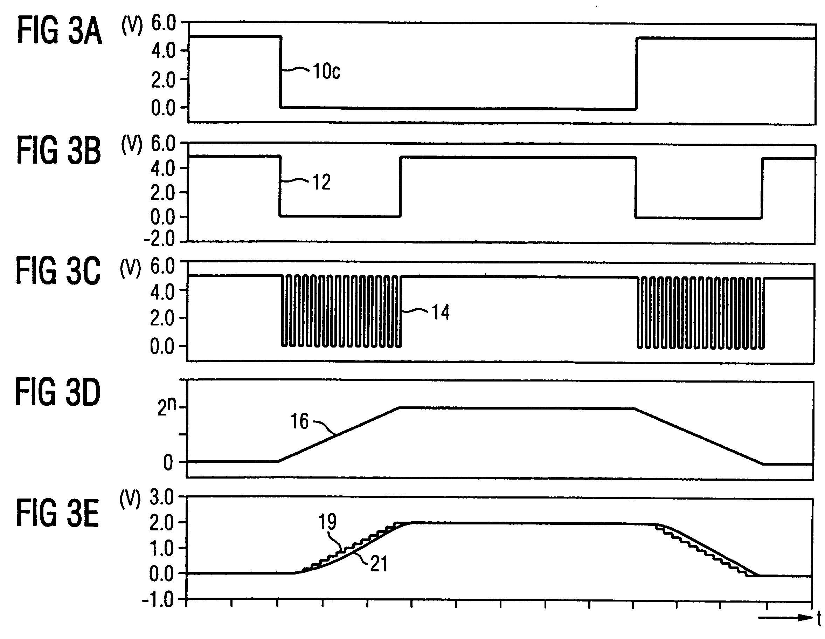

Nachfolgend wird die Funktion der Schaltung zur Flankenformeinstellung 9 anhand der Impuls-Zeit-Diagramme in Figur 3 näher erläutert.

Eine negative Flanke (H-L) des zu sendenden Datensignais 10c (Figur 3(a)) bewirkt, daß der Oszillator 13 durch das Steuersignal 12 (Figur 3(b)) gestartet wird. Die ausgangsseitig vom Oszillator 13 erzeugten Taktimpulse 14 (Figur 3(c)) werden von dem Aufwärt-Abwärts-Zähler 15 kontinuierlich gezählt. Der Zähler 15 bewirkt mit seinem Zählerstandsignal 16 (Figur 3(d)), daß der nachgeschaltete DA-Wandler 18 ein Analogsignal 19 mit stufenförmigen Signalflanken erzeugt (Figur 3(e)), das der jeweiligen Zählerposition des Zählers 15 entspricht. Das Analogsignal 19 wird zur Glättung der Stufen einem nachgeschalteten Tiefpaßfilter 20 zugeführt. Am Ausgang des Glättungsfilters 20 ist dann ein Ausgangssignal 21 (Figur 3(e)) abgreifbar, das Taktflanken in der Form von Sinushalbwellen aufweist. Das Ausgangssignal 21 entspricht somit einem durch die Wandlereinrichtung 18 vorgegebenen Potential, das zusätzlich geglättet wurde.

Nach einer vorgegebenen Anzahl von Taktimpulsen 14 erzeugt die Zählereinrichtung 15 ein Regelsignal 17, das in die Steuereinrichtung 11 rückgekoppelt wird. Die Steuereinrichtung 11 stoppt über das Steuersignal 12 (Figur 3(b)) den Oszillator 13. Diese Anzahl von Takten entspricht typischerweise der Anzahl der Spannungswerte, die der DA-Wandler 18 ausgeben kann. Bei einem 4-Bit DA-Wandler 18 wird somit der Oszillator 13 nach maximal 16 Taktperioden gestoppt. Die Zählereinrichtung 15 hat somit vorzugsweise die gleiche Datentiefe wie der Digital-Analog-Wandler 18.

Nach einer positiven Taktflanke (L-H) des zu sendenden Signals 10c (Figur 3(a)) läuft der oben beschriebene Vorgang umgekehrt ab.

Als DA-Wandler 18 wird dabei vorteilhafterweise ein nach dem Parallelverfahren arbeitender DA-Wandler 18 verwendet. Mittels einer geeigneten Dimensionierung des Spannungsteilers des Parallel-DA-Wandler 18 werden den Spannungswerten des DA-Wandlers 18 jeweils einzelne Wandlerschritte zugeordnet. Das heißt, die Höhe der einzelnen Stufen des Analogsignals 19 sind auf diese Weise gezielt einstellbar. Somit läßt sich durch geeignet eingestellte Referenzwiderstände des DA-Wandlers 18 die Flankenform des Ausgangssignals 21, derart optimieren, daß diese der Form einer Sinushalbwelle entsprechen Da Signale, deren Flanken die Form einer Sinushalbwelle aufweisen, einen besonders niedrigen Oberwellengehalt haben, nämlich theoretisch nur die Grundwelle, verursachen solche Ausgangssignale 21 auf der Busleitung 1 eine minimale bzw. gar keine EMV-Abstrahlung.

Als Wandlereinrichtung 18 wäre jedoch auch jeder andere DA-Wandler 18 denkbar. Beispielsweise könnte die Wandlereinrichtung 18 durch einen Arbeitswiderstand mit umschaltbaren, steuerbaren Stromquellen realisiert werden. Die steuerbaren Stromquellen könnten dabei als Transistoren, die beispielsweise über eine Logikschaltung ansteuerbar sind, ausgebildet sein. Ein solches Diodennetzwerk liefert ebenfalls einen Strom mit stufenförmigen Flanken, ist jedoch schaltungstechnisch aufwendiger als der oben beschriebene Parallel DA-Wandler.

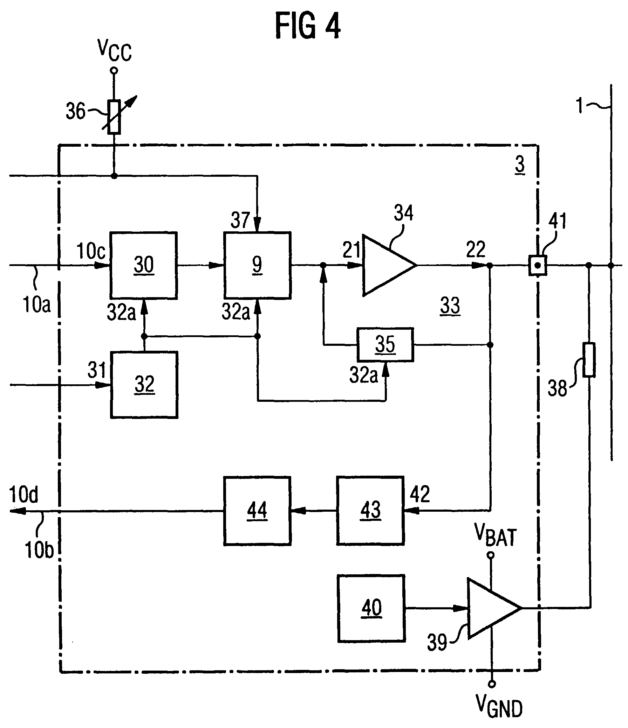

Figur 4 zeigt ein bevorzugtes Ausführungsbeispiel einer Transceiverschaltung für ein Ein-Draht Bussystem, die eine erfindungsgemäße Schaltung zur Flankenformeinstellung entsprechend Figur 2 aufweist.

Der Schaltung zur Flankenformeinstellung 9 ist in Figur 4 eine Time-Out-Schaltung 30 vorgeschaltet, der das zu sendende Datensignal 10c zugeführt wird und die die nachgeschaltete Schaltung 9 ansteuert. Außerdem ist eine Steuerlogikschaltung 32 vorgesehen, der ein erstes Steuersignal 31 zugeführt wird. Im vorliegenden Fall handelt es sich um ein 2-Bit-Steuersignal.
Die Steuerlogikschaltung 32 erzeugt dann ein zweites Steuersignal 32a, das der Time-Out-Schaltung 30 sowie der Schaltung 9 zugeführt wird.

Zwischen der Schaltung zur 9 und dem Bus 1 kann zusätzlich eine Verstärkereinrichtung 33 geschaltet sein. Im vorliegenden Ausführungsbeispiel umfaßt die Verstärkereinrichtung 33 einen analogen Operationsverstärker 34 mit Gegenkopplungszweig 35. In den Gegenkopplungszweig 35 wird zudem das zweite Steuersignal 32a der Steuerlogikschaltung 32 eingekoppelt. Die Verstärkereinrichtung 33 dient hier der Verstärkung des auf den Bus 1 aufzuprägenden Ausgangssignals 21. Der Verstärker 33 weist vorzugsweise eine feste Spannungsverstärkung V auf, beispielsweise V = 2, auf und treibt die Übertragungsleitung des Busses 1 mit einem verstärkten Ausgangssignal 22.

Das Glättungsfilter 20 der Schaltung 9 und/oder der nachgeschaltete Verstärker 33 sind jedoch für die Erzeugung eines Ausgangssignales 21, 22 mit sinushalbwellenförmigen Flanken nicht zwingend notwendig. Allerdings ist das Glättungsfilter 20, insbesondere bei einem DA-Wandler 18, der eine geringe Bitbreite aufweist, von großem Vorteil, da dadurch die mitunter relativ großen Stufen der Flanken des Analogsignals 19 weitgehend herausgefiltert werden. Auf diese Weise läßt sich die EMV-Abstrahlung deutlich verringern.

Über einen vorzugsweise einstellbaren Widerstand 36, der der Oszillatorschaltung vorgeschaltet ist und mit einem Betriebspotential V_{CC} verbunden ist, ist ein weiteres Steuersignal 37 in den Oszillator 13 der Schaltung zur Flankenformeinstellung 9 einkoppelbar. Über diesen Widerstand 36, der typischerweise extern ausgebildet ist, läßt sich die Arbeitsfrequenz und somit die mittlere Steigung der Taktflanken des Ausgangssignals 21, 22 an die gewünschte Datenübertragungsrate anpassen. Je nach Dimensionierung des einstellbaren Widerstandes 36 läßt sich somit eine mehr oder weniger hohe Datenübertragungsrate des Bussystems erreichen.

Darüber hinaus ist als Last für die Verstärkungseinrichtung 33 ein Leitungsabschlußwiderstand 38 vorgesehen. Im vorliegenden Ausführungsbeispiel ist der Leitungsabschluß als High-Side-Schalter ausgebildet. Der Fußpunkt bzw. das Massepotential V_{GND} des Leitungsabschlußwiderstandes 38 wird über einen Lastfußpunkttreiber 39 vom Ausgang 41 der Transceiverschaltung 3 der Busleitung 1 parallel geschaltet. Der Lastfußpunkttreiber 39 ist im vorliegenden Ausführungsbeispiel ein Low-Side-Treiber, der den Leitungsabschlußwiderstand 38 mit dem Potential der Bezugsmasse V_{GND} verbindet.

Zusätzlich ist noch eine Schutzschaltung 40 für den Lastfußpunkttreiber 39 vorgesehen. Diese schaltet den Lastfußpunkttreiber 39 bei einem Absinken der Differenz des Batteriepotentials und dem Potential der Bezugsmasse (V_{BAT}-V_{GND}) ab. Diese kann beispielsweise bei einem Kurzschluß der Speisespannung V_{BAT} mit dem Bezugspotential V_{GND} oder zum Beispiel wenn der Kontakt des Netzwerkknotens 2 mit dem Potential der Bezugsmasse V_{GND} abgetrennt wird bzw. hochohmiger wird (sogenannter Lost-Off-Ground) auftreten. Diese Abschaltung bewirkt, daß die Busleitung 1 nie über ein abgehobenes Massepotential V_{GND} im Netz beeinflußt oder gar blockiert werden kann.

Die Transceiver-Schaltung 3 in Figur 4 weist neben der Einrichtung zum Senden eines Datensignals 10c auch eine Einrichtung zum Empfangen von vom Bus 1 eingekoppelten Datensignalen 42 auf. Der Ausgang 41 der Transceiver-Schaltung 3 dient bei einem Ein-Draht-Bussystem daher gleichzeitig auch als Eingang.

Über den Ausgang/Eingang 41 wird ein vom Bus 1 eingekoppeltes Datensignal 42 über ein Eingangsfilter 43 und über eine Verstärkungseinrichtung 44 in die Transceiver-Schaltung 3 eingekoppelt. Eingangsfilter 43 und Verstärkungseinrichtung 44 bilden somit die Empfangseinrichtung der Transceiverschaltung 3. Das gefilterte und verstärkte eingekoppelte binäre Datensignal 10d kann über die Empfangsleitung 10b von einem nachgeschalteten Mikroprozessor 6 abgegriffen werden.

Nachfolgend werden die verschiedenen Betriebsmodi der Transceiverschaltung 3 anhand von Figur 4 näher beschrieben. Die Steuerlogikschaltung 32 legt wie bereits erwähnt mittels des Steuersignals 32a den Betriebsmodus der Transceiverschaltung 3 fest. So sind beispielsweise bei einem 2-Bit-Steuersignal 31 maximal 4 verschiedene Betriebsmodi einstellbar. Folgende Betriebsmodi können dabei vorgesehen sein:

### 1. Normalbetrieb:

In diesem Modus sendet die Transceiver-Schaltung 3 Datensignale über den Bus mit einer relativ niedrigen Übertragungsrate von typischerweise 25 Kbit/sec. Die Schaltung zur Flankenformeinstellung 9 ist in diesem Betriebsmodus gewöhnlich aktiviert.

### 2. High-Speed-Mode:

In diesem Betriebsmodus werden Daten mit einer relativ hohen Übertragungsrate bis zu 100 Kbit/sec über den Bus 1 übertragen. Um solch hohe Übertragungsraten zu übertragen , ist die Schaltung zur Flankenformeinstellung 9 typischerweise deaktiviert.

### 3. Sleep-Mode:

Ist bei einem Netzwerkknoten 2 die entsprechende Transceiver-Schaltung 3 deaktiviert, d. h. es ist kein Datentransfer zum Bus 1 vorgesehen, dann wird die Transceiver-Schaltung 3 in den Sleep-Mode gesteuert. Im Sleep-Mode hat der entsprechende Netzwerkknoten 2 dann eine sehr geringe Leistungsaufnahme.

### 4. Wake-Up-Modus:

Im Wake-Up-Modus ist die Schaltung zur Flankenformeinstellung 9 aktiviert. Gleichzeitig wird durch eine entsprechende Steuerung des Rückkopplungszweigs 35 der Verstärkereinrichtung 33 die Verstärkung des Ausgangssignals 21 erhöht. Auf die Busleitung 1 wird dadurch ein sogenanntes Wake-Up-Signal eingeprägt. Gegenüber dem Normalsignal hat dieses Wake-Up-Signal eine deutlich erhöhte Amplitude. Mit dem Wake-Up-Signal einer Mastereinheit werden alle Netzwerkknoten 2 am Bussystem "geweckt" und danach selektiv aktiv geschaltet oder wieder in den Sleep-Modus geschaltet. Mittels dieses Wake-Up-Modus wird die mittlere Stromaufnahme eines Bussystems deutlich reduziert, da alle "schlafenden" Netzwerkknoten 2, die während eines Bustransfers nicht angesprochen werden, im Sleep-Modus verharren. Die Empfangseinrichtung 43, 44, 10b gibt ein vom Bus 1 kommendes Datenpaket 42 während des Sleep-Modus somit nur dann an den nachgeschalteteten Mikrocontroller 6 weiter, wenn sie für eine definierte Mindestzeit den gegenüber dem Normallevel deutlich höheren Wake-Up-Spannungslevel identifiziert hat.

Kommt es während des Sleep-Modus zu einer von der Empfangseinrichtung 43, 44, 10b registrierten Veränderung des Datentransfers auf der Busleitung 1, dann wird die im Sleep-Modus befindliche Transceiver-Schaltung 3 bzw. der entsprechende Netzwerkknoten 2 wieder aufgeweckt und in den Betriebszustand, daß heißt Normalbetrieb oder High-Speed-Mode, oder den Wake-Up-Modus gesteuert.

Darüberhinaus kann die Time-Out-Schaltung 30 die Transceiver-Schaltung 3 für den Fall abschalten, wenn sich das zu sendende Datensignal 10c für eine vorgegebene Zeitspanne, beispielsweise einige Millisekunden, nicht verändert hat. Dies ist insbesondere von Vorteil, wenn beispielsweise der vorgeschaltete Mikroprozessor 6 aufgrund eines Fehlers dauerhaft ein aktives Datensignal absendet. Der Bus 1 kann dann ebenfalls dauerhaft durch den entsprechenden Netzwerkknoten 2 blockiert werden, denn der Dominant-Pegel kann nie von anderen Netzwerknoten überschrieben werden. Dadurch können die übrigen am Bus 1 angeschlossenen Netzwerkknoten 2 keine Daten mehr empfangen bzw. senden. Der Bus 1 ist somit blockiert. Über die Time-Out-Schaltung 30 wird bei einem solchen Fehler der entsprechende Netzwerkknoten 2 nach einer vorgegebenen Zeit vom Bus 1 über ein Time-Out-Signal abgekoppelt.

Besonders vorteilhaft ist die Erfindung in der Kraftfahrzeugelektronik in einem Bordnetzsystem wie beispielsweise einem CAN-Bussystem.

Obwohl die vorliegende Erfindung anhand bevorzugter Ausführungen beschrieben wurde, sollte sie nicht als auf diese Ausführungsbeispiele beschränkt betrachtet werden. Verschiedeneste Alternativen für vorteilhafte andere Ausführungsformen bzw. Modifikationen ergeben sich zweifellos für einen Fachmann bei der Betrachtung der obigen Beschreibung.

## Patentansprüche

1. Sendeeinrichtung zur seriellen Datenübertragung von binären Daten zwischen mindestens zwei Kommunikationsstationen (2, 2a, 2b), die über eine einzelne Busleitung (1) miteinander gekoppelt sind,
**dadurch gekennzeichnet,** daß
die Sendeeinrichtung (3, 3a) eine Schaltung zur Flankenformeinstellung (9) aufweist, die aus einem zu sendenden Datensignal (10c) ein Ausgangssignal (21, 22) erzeugt, dessen aufsteigende und abfallende Flanken an den Kurvenverlauf einer Sinusfunktion angenähert sind, wobei jeweils eine der Flanken an die aufsteigende Sinushalbwelle und die jeweils andere Flanke an die abfallende Sinushalbwelle angenähert ist.

2. Sendeeinrichtung nach Anspruch 1,
**dadurch gekennzeichnet,** daß
die Sinushalbwellen aus der Funktion (cosx)² abgeleitet sind, wobei x den Winkel im Bogenmaß bezeichnet.

3. Sendeeinrichtung nach einem der vorhergehenden Ansprüche,
**dadurch gekennzeichnet,** daß
• die Schaltung zur Flankenformeinstellung (9) mindestens eine Takterzeugungseinrichtung (13), mindestens eine Zählereinrichtung (15) und mindestens eine Wandlereinrichtung (18) aufweist,
• die Takterzeugungseinrichtung (13) aus dem zu sendenden Datensignal (10c) ein Taktsignal (14) erzeugt, das der nachgeschalteten Zählereinrichtung (15) zugeführt wird,
• die Zählereinrichtung (15) taktgesteuert ein Zählerstandssignal (16) erzeugt,
• die Wandlereinrichtung (18) ein von dem Zählerstandsignal (16) abgeleitetes Analogsignal (19) mit stufenförmigen Flanken erzeugt.

4. Sendeeinrichtung nach Anspruch 3,
**dadurch gekennzeichnet,** daß
die Wandlereinrichtung (18) ein Parallel-D/A-Wandler ist.

5. Sendeeinrichtung nach einem der Ansprüche 3 bis 4,
**dadurch gekennzeichnet,** daß
die Wandlereinrichtung (18) einen Spannungsteiler mit einer Anzahl von Referenzwiderständen aufweist, wobei die einzelnen Stufenhöhen des Analogsignals (19) über die Dimensionierung der einzelnen Referenzwiderstände des Spannungsteilers einstellbar ist.

6. Sendeeinrichtung nach einem der Ansprüche 3 bis 5,
**dadurch gekennzeichnet,** daß
der Wandlereinrichtung (18) ein Glättungsfilter (20) zur Glättung der Stufen des Analogsignals (19) nachgeschaltet ist.

7. Sendeeinrichtung nach einem der Ansprüche 3 bis 6,
**dadurch gekennzeichnet,** daß
der Wandlereinrichtung (18) mindestens eine Verstärkereinrichtung (33) mit Rückkopplungszweig (35) zur Signalverstärkung des Ausgangssignals (21, 22) nachgeschaltet ist.

8. Sendeeinrichtung nach einem der Ansprüche 3 bis 7,
**dadurch gekennzeichnet,** daß
der Takterzeugungseinrichtung (13) ein einstellbarer Widerstand (36) zur Einstellung der Arbeitsfrequenz vorgeschaltet ist.

9. Bussystem zum seriellen Datentransfer von binären Daten zwischen mindestens zwei Kommunikationsstationen (2, 2a, 2b), die über eine einzelne Busleitung (1) miteinander gekoppelt sind, mit mindestens einer in mindestens einer der Kommunikationsstationen (2, 2b) enthaltenen Sendeeinrichtung nach einem der vorherigen Ansprüchen.

10. Bussystem nach Anspruch 9,
**dadurch gekennzeichnet,** daß
mindestens einer der Kommunikationsstationen (2, 2a, 2b) des Bussystems jeweils mindestens eine Sende-/Empfangseinrichtung (3, 3a, 3b) zum Senden und/oder zum Empfangen von Datensignalen und mindestens eine Spannungsregeleinrichtung (8b) zur Spannungsversorgung zugeordnet ist, die jeweils monolithisch auf einem einzigen Halbleiterchip integriert sind.

11. Bussystem nach Anspruch 9,
**dadurch gekennzeichnet,** daß
mindestens einer der Kommunikationsstationen (2, 2a, 2b) des Bussystems jeweils mindestens eine Sende-/Empfangseinrichtung (3, 3a, 3b) zum Senden und/oder zum Empfangen von Datensignalen, mindestens ein Microcontroller (6) zur Steuerung des Datentransfers über die Busleitung (1) und mindestens eine Spannungsregeleinrichtung (8b) zur Spannungsversorgung zugeordnet ist, die jeweils monolithisch auf einem einzigen Halbleiterchip integriert sind.

12. CAN-Kraftfahrzeug-Bordnetzsystem mit mindestens einem Bussystem zur Datenübertragung nach einem der Ansprüche 9 bis 11.

13. CAN-Kraftfahrzeug-Bordnetzsystem mit mindestens einer Sendeeinrichtung zur Datenübertragung nach einem der vorhergehenden Ansprüche.
